# EUROPÄISCHE PATENTSCHRIFT

(11) **EP 0 790 776 B1**
(45) Veröffentlichungstag und Bekanntmachung des Hinweises auf die Patenterteilung: **02.02.2000**
(21) Anmeldenummer: 95936583.4
(22) Anmeldetag: 02.11.1995
(51) Int. Cl.: A22C 13/00

(54) **FÄLLVERFAHREN FÜR VISKOSESCHLÄUCHE**
PROCESS FOR PRODUCING VISCOSE HOSES BY PRECIPITATION
PROCEDE DE PRODUCTION DE TUYAUX SOUPLES EN VISCOSE PAR PRECIPITATION

(30) Priorität: 14.11.1994 DE 4440636
(43) Veröffentlichungstag der Anmeldung: 27.08.1997
(73) Patentinhaber: Wolff Walsrode Aktiengesellschaft, D-29655 Walsrode (DE)
(72) Erfinder: BASFELD, Klaus, D-29664 Walsrode (DE)
(74) Vertreter: Pettrich, Klaus-Günter, Dr.
(86) Internationale Anmeldenummer: EP9504299
(87) Internationale Veröffentlichungsnummer: WO9614752

(56) Entgegenhaltungen:
- EP-A- 0 006 601
- EP-A- 0 267 489
- DE-A- 2 526 289
- DE-A- 3 318 906
- US-A- 2 105 273
- US-A- 2 910 380
- US-A- 4 164 536

## Beschreibung

Die Erfindung betrifft die Herstellung faserverstärkter Cellulosehüllen. Solche Faserhüllen werden z.B. hergestellt durch Beschichtung eines Faservlieses mit Viskose, Regenerierung der Viskose zu Cellulose in einem Fällungsvorgang, Weichmachung und Trocknung der Hülle.

Die zu einem Schlauch mit überlappender Naht geformte Vliesbahn wird ein- oder beidseitig mit Viskose beschichtet.

Dabei kommt es darauf an, die Vlieseinbettung möglichst schnell zu erreichen, um den nachfolgenden Prozeßschritt der Fällung einleiten zu können.

Eine Einbettung des Vlieses wird durch beidseitigen Viskoseauftrag besonders rasch und vollkommen erreicht, wenn man hierzu eine Beschichtungsvorrichtung verwendet, wie sie in EP 0 267 489 B1 dargestellt ist. Die einseitige Beschichtung hat den Nachteil einer langen Durchtränkungszeit. Zudem erreicht der Schlauch nicht die gleichmäßige Einbettung und damit die hohe Festigkeit der beidseitig viskosierten Hülle.

Die üblicherweise zur Beschichtung eingesetzte Xanthogenat-Viskose besteht aus rund 85 Gew.-% Wasser und es verbleiben nur 7 bis 9 Gew.-% als Festkörper nach der Umwandlung zu Regeneratcellulose. Trotz der extrem hohen Viskosität setzt Viskose wegen des hohen Wassergehalts einer langsamen Verschiebung bei niedriger Krafteinwirkung kaum Widerstand entgegen, was bei der Einleitung des Fällvorgangs von Bedeutung ist. Es führen nämlich sehr geringe Druckänderungen im Schlauch beim Fällprozeß zu Veränderungen in der Gefügeausbildung des Celluloseregenerates.

Es verläßt die Viskosedüse bei vollkommener Vlieseinbettung ein sehr empfindliches Gebilde, wenn zur Vliesherstellung die üblicherweise verwendete Manila-Hanffaser eingesetzt und vollkommen in wäßrige Viskose eingebettet ist.

Bei den Standardverfahren durchläuft der die Viskosiereinrichtung verlassende Schlauch von oben nach unten eine Luftstrecke, bevor er in das Fällbad eintaucht.

Das Fällbad befindet sich in einem Behälter von 1-4 Metern Tiefe mit einer Umlenkwalze im Behältersumpf, über die die Laufrichtung des Schlauches umgekehrt wird. Beim Durchlaufen der Fällflüssigkeit wird versucht, die in der Viskose enthaltene Lauge (z.B. Natronlauge) von etwa 6 Gew.-% mit Säure (z.B. Schwefelsäure gegebenenfalls auch organische Säuren) weitgehend zu neutralisieren. Diese beidseitige Neutralisation führt zu ausgeprägten Schrumpfspannungen, die schwer zu beherrschen sind. Dabei kommt es zunächst zu einer Vorverfestigung der Koagulation mit anschließender Umwandlung zu Cellulose.

Die Regenerierung erfolgt auf der Schlauchaußen- und -innenseite nahezu gleichzeitig. Diese beidseitige Neutralisation führt zu ausgeprägten Schrumpfspannungen, die schwer zu beherrschen sind.

Das zur Innenfällung benötigte Bad wird durch Zu- und Ablaufgestänge ständig zugeführt und ausgetauscht.

Die Fällungsbäder enthalten neben der Säure, meist Schwefelsäure, auch den Regenerierungslauf puffernde Salze meist der eingesetzten Säure. Als Puffersalze in Schwefelsäurebädern kommen bevorzugt Natrium-, Ammonium-, Zinksulfate zum Einsatz.

Diese Abpufferung ist nötig, da die Neutralisation zwischen Schwefelsäure und Lauge sehr schnell erfolgt und es dabei zur Ausbildung einer wenig säure- und besonders gasundurchlässigen Celluloseregenerathaut kommt.

Dadurch wird der weitere Ablauf des Umwandlungsvorganges von Viskose zu Celluloseregenerat stark gebremst: An der Trennstelle zwischen Celluloseregenerat und koagulierter Viskose sammelt sich Gas, das die Celluloseregeneratschicht nur in begrenzter Menge zu durchdringen vermag. Diese ehemaligen Trennstellen mit Gasansammlung bleiben als lichtreflektierende Flächen nach Fertigstellung der Hülle zurück (Bezeichnung "Lametta", angelsächsisch "shiny spots"). Die Anzahl der reflektierenden Kleinflächen ist ein Maßstab für die Gleichmäßigkeit des Fällungsablaufes.

Schwefelsäure wird zur Fällung weitgehend eingesetzt, weil sie als zweibasische Säure zur Neutralisation von Natronlauge in der Viskose sehr wirkungsvoll und auch preisgünstig ist.

Natürlich kann eine zur Regenerierung notwendige Neutralisation mit jeder anderen organischen oder anorganischen Säure oder deren Gemische erfolgen.

Eine Anhebung der Säurekonzentration zur Beschleunigung der Regenerierung erfordert auch eine starke Erhöhung der Zumischung an Puffersalzen.

Weiterhin erfolgt bei der Reaktion bzw. Ausbildung von Celluloseregenerat eine Wasserfreisetzung und Kontraktion in der gebildeten Cellulose. Es kommt zu ungleichmäßiger Feststoffverteilung und zu einer starken Schwächung der Hülle. Zur Vermeidung muß ein Druck im Schlauchinnern beim Fällprozeß aufgebaut werden. Das erreicht man dadurch, daß der Innenfallbadspiegel höher als der Außenfällbadspiegel gehalten wird, alternativ das spezifische Gewicht des Innenfällbades höher als das des Außenfällbades eingestellt ist oder mit einer Kombination beider Maßnahmen.

Diese geringen Druckunterschiede genügen schon, um den Schlauch bei der Fällung hinreichend gestreckt zu halten, bedingt durch die wäßrige Struktur der Viskose.

Die notwendige Maßnahme der Innendruckerhöhung wirkt leider auch auf die bei der ersten Phase der Regenerierung noch nicht von koagulierter Viskose umhüllte Überlappungsnaht des Faservlieses.

Sie gleitet sehr leicht in der Flüssigphase der Viskose auseinander, was zwangsläufig zu einer geschwächten Hülle führt oder gar zu Unbrauchbarkeit.

Somit ist die Gestaltung des Innenfällbades ein Kompromiß zur Vermeidung zweier Fehlerentstehungsmöglichkeiten. Entweder Auseinandergleiten der Naht oder Ausbildung von Fehlerstellen im Celluloseregenerat, die als Celluloseanhäufungen, hier bezeichnet als Viskoseschrumpffalten oder einfach Viskosefalten, optisch erkennbar sind.

Weiterhin bestimmt die Innenfällbadhöhe, wie tief die Umlenkwalze im Fällbadbehälter angeordnet werden kann. Das im Schlauchinnern freigesetzte Gas erniedrigt das spezifische Gewicht der lnnenfallbadflüssigkeit, wodurch der die noch labile Hülle stützende Innendruck abgebaut wird. Dieser Innendruckabbau addiert sich mit Zunahme der Innenfällbadhöhe und begrenzt die Schlauchlänge zwischen Fällbadoberfläche und Umlenkwalze im Fällbehälter. Bei höherem Außendruck wird der unverfestigte Viskoseschlauch zusammengedrückt und beschädigt.

Die Kombination aus Fällung, Pufferung durch Salze, Verstreckung über Innenfällbad, Fällbadtiefe legen die Produktionsgeschwindigkeit fest.

An der Umlenkwalze muß der Schlauch durch sein ganze Wanddicke soweit verfestigt sein, daß es nicht mehr zu Strukturverschiebungen und damit Schädigungen kommt.

Als nachteilig bei dem beschriebenen Standardverfahren ist festzuhalten:
- Eine Luftstrecke zwischen Viskosierdüse und Fällbadoberfläche, die zur Fällung nicht genutzt wird und nur der Viskoseverteilung dient, wie z.B. im Patent US 4 164 536 besonders deutlich dargestellt für die einseitige Außenviskosierung.
- Ausbildung einer wenig durchlässigen Außenhaut im Fällbad und damit ein langsamer Ablauf des Fällungsprozesses.
- Der starke Schrumpf durch das praktisch gleichzeitige Einsetzen des Neutralisations- und Fällprozesses auf der Schlauchaußen- und -innenseite mit Gefahr der Viskosefaltenbildung.
- Eine eingeschränkte Flexibilität bei der Einstellung der Höhe des Innenfällbades bzw. lnnenfällbadspiegels mit Gefahr von Fehlerbildung am frischen Darm.
- Damit im engen Zusammenhang die begrenzte nutzbare Tiefe des Fällbadbehälters.
- Als Resultat daraus eine nicht abgeschlossene Neutralisation bei der Umlenkwalze und Ansammlung von verbrauchtem Fallbad im aufsteigenden Schlauchteil sowie Gasansammlung. Die Fällung ist beim aufsteigendem Schlauch nur noch von außen wirksam.
- Die Verwendung von einem Fällbad mit einem hohen Gehalt an Puffersalzen, die im nachfolgenden Waschprozeß aus der Schlauchhülle entfernt werden müssen und das Abwasser belasten.
- Eine begrenzte Einwirkung der Innenfällung und damit die Notwendigkeit, die Regenerierung zeitaufwendig über die Außenfällung zu bewirken.
- Einsatz von unterschiedlichem Außen- und Innenfällbad. Das führt in kritischen Produktionsphasen mit vielen Schlauchplatzern zu einer Bädervermischung, also instabilem Prozeß. Die Herstellung zweier Fällungsbader unterschiedlicher Konsistenz ist aufwendig.
- Die begrenzte Produktionsgeschwindigkeit, die durch die zuvor aufgeführten Kriterien vorgegeben ist.

Die Problematik der nur geringen Produktionsgeschwindigkeiten durch verfahrensbedingte Grenzen spornt die Suche nach Alternativen an, die möglichst die erläuterten Einschränkungen aufheben.

Eine derartige Alternative ist z.B. in Patent EP 6601 beschrieben.

Zunächst wird in üblicher Weise ein Faservliesschlauch viskosiert und von oben nach unten zu einer Umlenkwalze geführt.

Die Fällung erfolgt mit Fällflüssigkeit, die über Ringschlitzspalte außen auf die zu fällende Viskoseoberfläche aufgetragen wird und infolge Schwerkraft in einen Sammelbehälter unterhalb der Umlenkwalze abläuft.

Im Schlauchinnern wird eine solche Menge Fällflüssigkeit gehalten, daß unter deren Gewicht die Moglichkeit einer Innen-Schlauchdurchführung zum Gasausgleich zwischen ab- und aufsteigendem Viskoseschlauch erhalten wird.

Das gaskommunizierende System setzt voraus, daß ein Eintauchen des Schlauches in ein Außenfällbad nicht vorliegt, ist somit Bestandteil des Verfahrensablaufes.

Hiermit werden zum Teil die beim üblichen Tauchverfahren in einem Fällbadbehälter bestehenden Probleme vermieden. Es gibt nicht mehr das Steuerungsproblem des Innenfällbadspiegels, es entfällt die zur Fällung ungenutzte Luftstrecke zwischen Viskosierdüse und Fällbadoberfläche, es entfällt teilweise die Einschränkung der Fällgeschwindigkeit durch die Bildung der wenig durchlässigen Außenhaut.

Bei diesem Verfahren sind aber andere Nachteile zur Erreichung eben dieser Vorteile in Kauf genommen worden.

Ein ganz erheblicher Nachteil des Verfahrens ist die Belastung des frischen Viskoseschlauches unterhalb der Viskosierdüse.

Ist beispielsweise eine beidseitige Viskosierung mit voller Vlieseinbettung erfolgt, so liegt ein äußerst labiles, wäßriges System vor.

Der frische Viskoseschlauch muß nach Austritt aus der Düse das gesamte Gewicht des unterhalb der Düse hängenden Viskoseschlauches bis zur Umlenkwalze aufnehmen.

Hierzu addiert sich das auf der Schlauchaußenfläche herablaufende Außenfällbad mit dem austretenden Quellwasser, gegebenenfalls auch Fällbad auf der Innenfläche und anteilig das Innenfällbadgewicht unterhalb der Umlenkwalze. Auf den Schlauch wirkende schwankende Belastung führt zu unterschiedlicher Verstreckung des labilden Gefuges in Laufrichtung des Schlauches und beeinflußt die Kaliberkonstanz.

Desweiteren muß dem Schrumpfverhalten durch einen wirksamen Innengasdruck gegengesteuert werden, eine weitere Belastung

Das Verfahren setzt damit die Verwendung eines hochlaugenfesten Faservlieses voraus, das die beschriebene Belastung ohne Schädigung des Gesamtgefüges aufzunehmen vermag.

Somit sind einschränkend nur Vliese verwendbar, die diese Laugenfestigkeit besitzen

Diese Belastung kann man abbauen, indem man die Fällstrecke zwischen Viskosierduse und Umlenkwalze verkurzt. Das mindert wiederum die Produktionsgeschwindigkeit, da bis zur Umlenkwalze eine Mindestfestigkeit infolge Koagulation und Regenerierung erreicht sein muß, die Strukturverschiebungen in der Darmwandung ausschließt.

Um die Belastung nach der Viskosierduse abzubauen wäre eine einseitige Viskosierung für dieses Fällverfahren von Vorteil. Ein teildurchtränktes Faservlies, wie es nach einer Außenbeschichtung die Viskosiereinrichtung verläßt, besitzt nämlich eine höhere Laugenfestigkeit und könnte damit die Belastung durch den Viskoseschlauch besser aufnehmen.

Damit müßte man auf eine beidseitige Beschichtung, die bekanntlich eine höhere Festigkeit infolge optimaler Vlieseinbettung besitzt, verzichten.

Die Produktionsgeschwindigkeit bei dieser Verfahrensweise wird auch vorgegeben durch einen begrenzten Abstand zwischen Viskosiereinrichtung und Umlenkwalze. Im Schlauchinnern anfallende Flüssigkeit wie z.B. Quellwasser sammelt sich im Bereich der Umlenkwalze und muß von dort abgesaugt werden.

Die Absaughöhe ist bekanntlich begrenzt durch das max. erzeugbare Vakuum von 10 m Wassersäule, in der Praxis 9 m.

Infolge der Salze aus Neutralisation und Säureabpufferung liegt das spezifische Gewicht der abzusaugenden Flüssigkeit bei 1,2 bis 1,3 kp/ebm. Damit wird die absaugbare Flüssigkeitshöhe auf 7 bis 7,5 m begrenzt. Einschließlich der Lage des Absaugpunktes oberhalb der Viskosiereinrichtung und Druckverlusten entsteht eine Abstandsbegrenzung zwischen Viskosierdüse und Umlenkwalze von 6 bis 7 m bei wirkungsvoller Innenabsaugung.

Dieser Abstand muß ausreichen, dem Viskoseschlauch die nötige Festigkeit durch Fällung gegen Verformungsschäden durch Umlenkung um die Walze zu geben.

Zur Absicherung gegen die Ausbildung von Schrumpffalten im Viskoseschlauch bzw. Celluloseregenerat erfordert das Verfahren bei der Fällung von außen eine Abstützung durch einen Innendruck. Der benötigte Innendruck ist schon aus Gründen von Uberluppungsnaht-Belastungen niedrig. Ein Nachteil, da im Prozeßablauf sich innen anfallendeGase mit einem gegen Luft erhöhtem spezifischen Gewicht ansammeln und den Innendruck verandern. Die Regelung eines sehr niedrigen Druckes macht Schwankungen unvermeidlich. Diese unterschiedlichen Belastungen wirken auf den Viskoseschlauch.

Insgesamt handelt es sich um ein sehr anfälliges und komplizierter Verfahren. Dieses resultiert nicht nur aus auftretenden Belastungen und deren Schwankungen.

Auch die Bedienung bei Wiederinbetriebnahme muß als aufwendig angesehen werden: Nur ein bereits hinreichend gefällter Schlauch kann über die Umlenkwalze eingefädelt werden, dabei muß eine Gasdruckausgleichsleitung mit eingeführt werden, der Stützluftdruck muß über eine Trenneinrichtung zur Außenatmosphäre aufgebaut werden.

Problembehaftet sind somit bei dem System nach Patent EP 6601 folgende Verfahrensgegebenheiten:
- Die Kompliziertheit des Verfahrens.
- Die Anfälligkeit infolge ungleichmäßiger und hoher Belastungen des frischen Schlauches durch Eigengewicht und Stützluft.
- Begrenzte Einsatzmöglichkeit von Vliesstoffen durch hohe erforderliche Laugenfestigkeit. Problematisch sind besonders der Einsatz dünner Vliese mit hoher Viskoseauftragsmenge.
- Begrenzung der Fällstrecke durch die eingeschränkte Absaughöhe des Innenfällbades.
- Nach der Umlenkwalze ist keine Innenfällung mehr möglich Der Fällprozeß ist somit sehr stark auf die Außenfällung begrenzt. Hierzu sind lange Fällstrecken, verbunden mit hohem apparativen Aufwand, erforderlich.
- Der notwendige Einsatz von Stützluft mit den Problemen der Abdichtung
- Auswirkung der Stützluft mit deren Schwankungen auf Verschiebungen der in Viskoseflüssigkeit schwimmenden Naht. Eine Nahtverschiebung kann zur Unbrauchbarkeit der Hülle führen.
- Außen aufgetragene und ablaufende Fällflüssigkeit mindert die erwünschte Oberflächenglätte.
- Eingeschränkte Produktionsgeschwindigkeit durch Belastung des frisch viskosierten Schlauches und Grenzhöhe zur Innenfällbadabsaugung.

Die Beschreibung der Verfahrensproblematik an zwei Grundbeispielen zeigt die Grenzen, die der Herstellung von Celluloseschläuchen mit der ersten Fällstufe gesetzt sind.

Die erste Fällstufe ist produktionsgeschwindigkeitsbestimmend und bestimmt damit die Wirtschaftlichkeit der Fertigung.

Alle üblicherweise nachfolgenden Prozeßstufen sind verweilzeitabhängig und damit nur vom bereitgestellten Raumvolumen und Investkapital abhängig.

Die Produktionsgeschwindigkeiten bei der Fertigung faserverstärkter Cellulosehüllen liegt durchschnittlich unter 20 m/min.

Eine Produktionsgeschwindigkeitserhöhung würde erhebliche Einsparungen bei Prozeßbedienung und reparaturtechnische Betreuung durch Reduzierung von mechanischen und meßtechnischen Ausrüstungen für eine reduzierte Anzahl von Strängen erbringen.

Es ist daher die Aufgabe der Erfindung, eine Produktion mit erhöhter Produktionsgeschwindigkeit zu erreichen. Sie wird dadurch erreicht, daß die bekannten bestehenden Einschränkungen im ersten Fällprozeß vermieden werden.

Insbesondere ist es Hauptmerkmal des Verfahrens, kritische Grenzbereiche mit rascher Fehlerbildung zu vermeiden, beispielsweise Nahtverschiebungen oder Viskosefaltenbildung.

Das Verfahren gewährleistet eine vereinfachte Bedienung, die es positiv gegenüber den beschriebenen Fertigungstverfahren abgrenzt.

Die Anhebung der Produktionsgeschwindigkeit wird mit einfachen Ausrüstungen erzielt, wodurch die Nachrüstung bereits bestehender Anlagen einfach ermöglicht wird.

Das Verfahren basiert auf dem bekannten Fällsystem mit Fällbadbehälter, Außen- und Innenbeaufschlagung des Viskoseschlauches mit Fällbad.

Die bekannten Verfahren haben, wie zuvor beispielhaft beschrieben, nur recht kurze Innenfällstrecken. Das Mißverhältnis zwischen Innen- und Außenfällung führt bekannterweise zu basischem Innenbad hinter der Umlenkwalze, dessen Neutralisation über die Säure des Außenfällbades erfolgen muß.

Die Folge sind sehr lange Fällstrecken. Abfälle zur Entfernung basischer Innenfällbäder entstehen.

Bei dem neuen Verfahren lassen sich die Mängel bedingt durch die ungenügende Innenfällung vermeiden.

Die Innenfällung erfolgt direkt auf dem frischen Schlauch nach Verlassen der Viskosierdüse.

Entgegen der Erwartung führt ein Fällbadauftrag im Schlauchinnern nach der Viskosierung sehr rasch zur Schlauchverfestigung mit Fällgasfreisetzung.

Diese Schlauchverfestigung im Bereich der Fällgasatmosphäre ist derart wirksam, daß der frisch gefällte Schlauch 1 bis 2 Sekunden nach Verlassen der Viskosierdüse über abstützende Ringkörper gezogen werden kann ohne Beschädigung der Schlauchinnenfläche und die dabei aufgebrachte Reibungskraft in der Lage ist, das darunter befindliche Gewicht des Schlauches aufzunehmen.

Damit wird die Belastung des frischen Schlauches nach Beschichtungsabschluß mit Viskose geringer, als die beim Standardverfahren oder anderen bekannten Verfahren üblich ist

Überraschend ist auch, daß die Fasereinbettung durch Nachquellung in die Außenviskoseschicht durch due Innenfällung nicht gestört wird. Es ist weiterhin festgestellt worden, daß bei der einseitigen Vorfällung im Schlauchinnern unter Regeneriergasatmosphäre erhöhte Säurekonzentrationen eingesetzt werden können Dies war zunächst nicht erwartet worden, da üblicherweise eine erhöhte Säurekonzentration unter Beibehaltung der Puffersalzmengen pro Liter Fällflüssigkeit die Entstehung von Fällungsblasen (shiny spots) bewirkt.

Die unerwartete Steigerungsmöglichkeit der Säurekonzentration und der freie Gasaustritt bei fehlendem Gegendruck durch eine Flüssigkeitssäule aus Fällbad bedingt, daß die Fällung auf der Darminnenfläche stark beschleunigt abläuft.

Da die Festigkeit des Schlauches dadurch mit zunehmendem Abstand von der Viskosierdüse rasch ansteigt, können wiederholt tragende Abstützringe im Schlauch angeordnet werden, die den Einsatz von Stützluft überflüssig machen.

Es hat sich gezeigt, daß die innenfällbare Schlauchlänge oberhalb der Fällbadoberfläche nur begranzt wird durch den notwendigen Flüssigkeitsaustausch im Schlauchinnern über Abführen der Innenfällbadsäule durch ein Absaugegestänge.

Somit wird man die Vorregenerierstrecke bevorzugt bis zu 7 m lang ausführen, wenn man bestrebt ist, hohe Produktionsgeschwindigkeiten zu fahren und mit Absaugung arbeitet. 6 bis 7 Meter sind über bekannte Absaugeausrüstungen überwindbar.

Bei geeigneter Pumpenausrüstung, die bevorzugt bei der Herstellung großer Kaliber räumlich einbringbar ist, können diese Strecken entsprechend dem Pumpendruck verlängert werden.

Innenfällstrecken von 5 Metern beim Standardverfahren, also von der Eintauchoberfläche bis zur Umlenkwalze, führen bereits zum Erliegen der Gasfreisetzung infolge statischem Gegendruck des Fällbades am Boden des Fällbehälters.

Beim Eintauchen des innenvorgefällten Schlauches in die Fällflüssigkeit hat die vorher stattgefundene intensive Umwandlung der Viskose zu Celluloseregenerat zu einer Verminderung weiterer Gasfreisetzung geführt.

Im Schlauchinnern kommt es nur noch bei abgenommener Gasfreisetzung im Innenfällbad zu geringen Veränderungen des spezifischen Gewichtes. Der Schlauch kann nicht mehr wie beim Standardverfahren zusammengedrückt werden mit zunehmender Innenfällbadhöhe, zumal im Außenfällbad mit Erstfällung der Schlauchaußenseite eine intensive Gasfreisetzung einsetzt.

Der Schlauch ist zudem so verfestigt bzw. stabil, daß Darmschädigungen durch beispielsweise Nahtverschiebungen oder Viskosefalten ausbleiben.

Er ist nicht vergleichbar mit dem instabilen frischen Viskoseschlauch unter dem Einfluß beidseitiger, innen und außen, gleichzeitig ablaufender intensiver Fällung der Standardtechnik.

Diese Voraussetzung ermöglicht es, die Fällbadtiefe bei den neuen Verfahren bis zur Umlenkwalze nach Bedarf zu gestalten.

Die Fällbadtiefe kann somit so gewählt werden, daß eine abgesicherte Durchsäuerung des gesamten Schlauches vor Erreichen der Umlenkwalze am Fällbadboden erreicht ist. Ein solcher Schlauch ist besonders unempfindlich gegen bleibende Verformung bei Umlenkungen über die Walze bei extremsten Belastungsbedingungen.

Besonders bedeutungsvoll ist, daß infolge der Durchsäuerung der Fällungsprozeß hinter der Umlenkwalze beidseitig weiterläuft. Bekanntlich fällt bei den Standardverfahren mit intensiver Außenfällung im aufsteigenden Darmschlauch eine mehr oder weniger starke basische Schlauchinnenfüllung in Abhängigkeit von Fällbadtiefe und Produktionsgeschwindigkeit an.

Die intensive Außenfällung insbesondere im Bereich hinter der Umlenkwalze verdrängt Restlauge ins Darminnere.

So ist es überraschend, daß das neue Verfahren saure Fällflüssigkeit im Schlauchinnern besitzt und diese auch erhalten bleibt unabhängig von der Produktionszeit. Somit entfällt ein Öffnen des frisch gefällten Schlauches zwecks Entfernung angesammelter basischer Restflüssigkeit.

Offenbar führt die bei der Erstfällung überwiegende Regenerierung von der Schlauchinnenseite her zu einer Umkehrung der Restlaugenverdrängung von innen nach außen.

Aus dem Verlauf des Prozesses folgt auch, daß hinter der Umlenkwalze im Schlauchinnern nur noch eine stark reduzierte Gasmenge freigesetzt wird.

Beim Standardverfahren ist es erforderlich, daß in relativ kurzen Zeitfolgen das im Schlauch angesammelte Gas entfernt werden muß durch Öffnen des Schlauches. Diese Schlauchunterbrechungen müssen für die Folgeprozesse wieder aufwendig gekuppelt werden, sie führen zu Abfall und Produktionseinschränkungen bis zum Endverarbeiter. Das Gasentfernen erfordert bei der Produktion der Celluloseschläuche im Naßprozeß den Höchstaufwand der Bedienung.

Die neue Verfahrensweise bzw. Fälltechnik ermöglicht die Herstellung von endlosen Schläuchen der 4- bis 5fachen Länge.

Das führt zu einem reduzierten Bedienungsaufwand, Abfallminderung und gleichmäßiger Produktqualität.

Das Verfahren nutzt die gesamte Strecke zwischen Viskosierdüse und Umlenkwalze im verfahrensüblicherweise sehr tief ausgeführten Fällbadbehälters zur Schlauchumwandlung voll aus.

Ein Faservlies mit überlappter Naht wird in einer Viskosiereinrichtung bevorzugt beidseitig mit Viskose beschichtet. Dabei befindet sich üblicherweise mehr als 70 % der Viskose auf der Außenseite des Faservlieses.

Nach Verlassen der Viskosierdüse durchläuft der Viskoseschlauch eine Strecke mit Innenfällung und taucht dann zur Hauptfällung ins Fällbad.

Die Länge der Strecke ist durch die maximale Absaughöhe von 6 bis 7 Metern zwischen Innenfällbadspiegel und Austritt oberhalb der Viskosierdüse begrenzt, wenn keine zusätzlichen Fördermittel Verwendung finden. Beim vorliegenden Verfahren wird versucht, diese Strecke in voller Lange zur Innenfällung zu nutzen.

Der senkrecht von oben nach unten verlaufende frisch viskosierte Schlauch passiert kurz hinter der Viskosierung ein Vorfällungsbad im Schlauchinnern.

Hierbei wird soviel Fällbad auf das Schlauchinnere aufgetragen, daß es im Innern zu einer Viskosekoagulation und Ausbildung einer Celluloseregeneratschicht kommt.

Bei der Innenfällung bleibt die Außenviskoseschicht unberührt. Ihre Fällung erfolgt erst nach Eintauchen in die Fällflüssigkeit im Fällbadbehälter. Das hat den Vorteil, daß die Außenviskose, die mengenmäßig meist überwiegt, sich über die freie Strecke zwischen Viskosierdüse und Fällbadbehälter vergleichmäßigen kann.

Die Vergleichmäßigung der Oberfläche stellt einen erwünschten Effekt dar. Nach der Außenfällung wird eine besonders ebene, glatte Oberfläche erzielt. Ein Qualitätskriterium dafür, daß der Darm besonders gleichmäßig stabil und gleitfähig ist. Die Transparenz von z.B. grobkörnigen Rohwurstbräten wird erhöht, was als besonderes Qualitätskriterium zu werten ist.

Die innere Teilfällung führt zu einer Verfestigung der Schlauchhülleninnenseite. Insbesondere im kritischen Nahtbereich der Vliesüberlappung kommt es sehr rasch zur Koagulierung der Viskose.

Infolge der doppelten Vliesstärke in der Naht und dem geringeren Innenviskoseauftrag ist nämlich die Innenviskose-Abdeckschicht besonders dünn und rasch durchhärtbar.

In praktischer Versuchsdurchführung hat es sich herausgestellt, daß sinnvollerweise mit erhöhten Säurekonzentrationen um 100 g/l und Puffersalzgehalten von 200 bis maximal 300 g/l die Innenfällung erfolgen kann. Dadurch kommt es zu einer ausgeprägten Regenerierschicht, überraschenderweise ohne die Ausbildung von Fällungsblasen trotz der ungewöhnlich hohen Säurebelastung.

Der Vorteil dieser ausgeprägten Regeneratschicht der Schlauchinnenseite ist vielfach:
1. Es entsteht ein stabiler Schlauch, der von der Innenschicht getragen ist, vor Eintritt in das Fällbad des Fällbadbehälters
2 Die innere Regeneratschicht behält eine hinreichende Durchlässigkeit für den Fortgang des Fällprozesses.
3. Vor Eintauchen in das Fällbad ist bereits eine Teilregenerierung angelaufen. Der Gasaustritt im Schlauchinnern wird eingeschränkt. Das ist erwünscht, weil nach der Umlenkwalze im Schlauchinnern anfallendes Regeneratgas sich im aufsteigenden Schlauchast ansammelt und je nach Anfallmenge durch Öffnen der Schlauchhülle entfernt werden muß. Solche "Einschnitte" sind unerwünscht, da sie Unterbrechungen und Abfall in allen Nachfolgeprozessen verursachen.
4. Wegen der durchgeführten Teilfällung und Regenerierung des Schlauches ist es nicht erforderlich, im Schlauchinnern Stützgas zur Erhaltung der Darmstabilität einzubringen.

Den eigentlichen Fällungsprozeß mit beidseitiger Fällbadbeaufschlagung erreicht ein innen stark vorgefällter, in sich bereits stabiler Viskoseschlauch.

Übliche Schwierigkeiten beim Eintauchen in das Fällbad, verursacht durch Schwankungen der Fällbadsäule im Darminnern, entfallen, da Naht und Schlauchwandung bereits ein stabiles Celluloseregeneratgerüst besitzen.

So haben Tests ergeben, daß der Schlauch im Zustand des Eintauchens in das Fällbad im Innern mit einer 30 cm hohen Fällbadsäule belastbar ist, ohne daß Nahtverschiebungen auftraten.

Vergleichbare Fällbedingungen ohne Innenvorfällung führen bereits bei 30 mm zu Nahtverschi ebungen.

Der Fällprozeß im Fällbad wird damit unabhängig von der üblichen Problematik der genauen Steuerung der Differenz zwischen Innen- und Außenfällbadspiegel.

Besonders bedeutungsvoll ist das Phänomen, daß der innen vorgefällte Schlauch mit hohen Säurekonzentrationen bei niedrigen Zumischmengen von Puffersalzen von außen gefällt werden kann. die beim üblichen Verfahren absolut sicher zur Ausbildung des "Lametta-Effektes" und zur extremen Einschrankung der Fällgeschwindigkeit führen.

Auf Grund der hohen Stabilität des Viskoseschlauches mit Verfestigung der Schlauchüberlappungsnaht kann beim Eintauchen in den Fallbadbehälter die Innenfällbadspiegelhöhe gegenüber dem Außenfällbadspiegel ohne Schlauchschädigung weitgehend beliebig in der Höhe eingestellt werden. Das ermöglicht die Verwendung eines besonders tiefen Fällbadbehälters, da der Innenschlauchdruck durch die Höhe des Innenfällbadspiegels nach Bedarf aufbaubar ist.

Es ist nicht mehr nötig, für Außen- und Innenfällung ein unterschiedliches Fällbad beispielsweise mit verschiedener Dichte einzusetzen.

Damit bietet das erfindungsgemäße Fällverfahren die Möglichkeit der abgesicherten Produktion bei beinahe beliebiger Produktionsgeschwindigkeit.

Ein besonderer Vorteil des Verfahrens ist die erzielbare rasche Durchfällung bzw. Umwandlung des Viskoseschlauches zu Celluloseregenerat. Dabei ist bei den bisher bekannten Verfahren die Durchfällung von der Schlauchinnenseite her erheblich eingeschränkt.

Bis zum Erreichen der ersten Umlenkwalze ist die Durchfällung nur bis zu einem geringen Teil abgelaufen. Bei dem üblichen Verfahren wurde nachgewiesen, daß sich im Schlauch nach der Umlenkwalze basische Flüssigkeit ansammelt.

Das bedeutet, daß ein Großteil der Fällung nach der Umlenkwalze alleine über die Außenschlauchwand erfolgen muß. Diese Art der Durchfällung nur von außen verzögert den weiteren Ablauf der Regenerierung, wozu für eine starke verlängerte Verweilzeit erhöhter apparativer Aufwand nötig ist.

Über das dargestellte Verfahren wird die Gesamtregenerierzeit stark verkürzt, da die Innenfällung des Viskoseschlauches erheblich verlängert wird, zumal das Verfahren auf der Verwendung einer langen Luftstrecke mit Innenfällung zwischen Beschichtungseinrichtung mit Viskose und Fällbadoberfläche sowie einer tief liegenden Umlenkwalze im Fällbadbehälter aufbaut.

In Summe bedeutet dies auch eine zunehmende Regeneriergasfreisetzung bis zur Umlenkwalze im Schlauchinnern.

Weitere Hinweise auf Vorteile des Verfahrens:

Die Fällung bei niedrigem Gehalt an Puffersalzen entlastet den nachfolgenden Waschprozeß und das Abwasser.

Bei Verwendung von Ammoniumsulfat als Puffer ist eine starke Reduzierung in Relation zum Säureeinsatz möglich.

Der Regenierprozeß läuft weitgehend in einem Bereich mit kleiner Fläche ab. Dadurch kann das Regeneriergas konzentriert abgezogen und aufgearbeitet werden.

Die großvolumige Fällbadmenge im Fällbadbehälter gewährleistet sehr konstante Fällbedingungen, da die Ergänzung von verbrauchten Substanzen nur zu kleinen Veränderungen führt. Selbst Ausfälle von Dosiereinrichtungen können über längere Reparaturzeiträume verkraftet werden.

Damit ist mit einer relativ einfachen und leicht zu installierenden Maßnahme der Engpaß der ersten Fällung bei der Herstellung von faserverstärktem Viskoseschlauch erheblich abgebaut.

Ergänzend ist anzufügen, daß das Innenverfällbad in verschiedenster Weise aufgetragen werden kann, ohne den Effekt zu beeinflussen. Der Abstand des ersten Fällbadauftrages im Schlauchinnern wird von der Viskosierdüse weniger als 0,5 Meter betragen oder spätestens 1 Sekunde nach dem Viskoseauftrag erfolgen.

Nur bei schlecht arbeitenden Viskosiereinrichtungen werden diese Zeiten überschritten werden.

Ein mehrstufiger Auftrag, beispielsweise zweistufig, beinhaltet zunächst den sicherheitstechnischen Gesichtspunkt, den gleichmäßigen Fällbadauftrag zu gewährleisten.

Besonders bevorzugt wird man mehrere Auftrags- und Verteilereinrichtungen im Schlauchinnern anordnen, die gleichzeitig Stutzfunktion fur die zunächst labile frische Schlauchhülle gewähren.

Dabei ist es Bestandteil des Verfahrens, Säure- und Säurekonzentrationen mit Puffersalzen in Anpassung an den Ablauf des Regenerationsprozesses der Viskose zu Cellulose zu optimieren bzw. zu variieren.

Die Vorfällstrecke kann auch zur Kalibrierung des vorgefällten Schlauches genutzt werden. Dabei wird der bereits vorkoagulierte und teilverfestigte Schlauch über einen Kalibrierring gezogen. Die Viskoseaußenschicht wird dabei nicht gestört.

Die nachfolgende Beschreibung stellt den Verfahrensablauf dar.

Fig. 1 stellt einen schematischen Ablauf des Prozesses dar.

Fig 2 zeigt eine Kombination des Vorfällungsbades mit der Viskosierdüse.

Fig. 3 zeigt die Zuführung von Innenfällbad zum Vorfällbad.

Fig. 4 zeigt eine Fällbadverteilung und Darmstützeinrichtung.

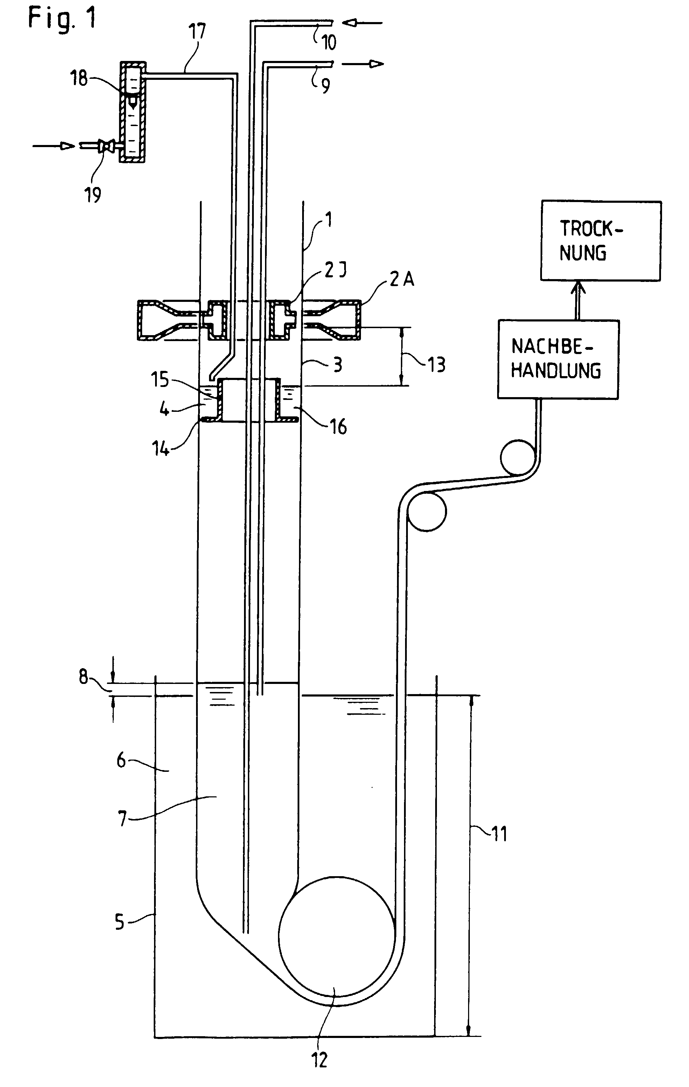

In der Darstellung gemäß Fig. 1 ist 1 das zu einem Schlauch geformte Faservlies mit überlappter Naht, das von oben nach unten kontinuierlich bewegt wird.

Die Viskosebeschichtung erfolgt in der Viskosierdüse, bestehend aus einer Außendüse 2A und einer Innendüse 2I. Viskosefördereinrichtungen und Zuführleitungen sind nicht dargestellt.

Nach Verlassen der Viskosierdüse gelangt der frisch viskosierte Schlauch zum Vorfällungsbad 4, angeordnet im Schlauchinnern. Danach erfolgt die eigentliche Fällung im Fällbadbehälter 5. Der Fällbadbehälter ist gefüllt mit dem Außenfällbad 6, im Schlauch befindet sich das Innenfällbad 7. Die bei der Viskoseumformung zu Cellulose erforderliche Spannung im Schlauchinnern bewirkt der gegenüber dem Außenfällbad erhöhte Innenfällbadstand 8. Es wird gesteuert durch die Absaugeeinrichtung 9 und die Fällbadzuführung 10. Dabei sorgt dieser Kreislauf für die ständige Erneuerung des verbrauchten Innenfällbades. Die Fällung mit Innen- und Außenfällbad hängt ab von der Verweilzeit, bestimmt durch die Eintauchtiefe 11 Nach Erreichen der Eintauchtiefe erfolgt die Umkehr der Laufrichtung des hinreichend ausgehärteten Schlauches über die Umlenkwalze 12, nach Verlassen des Fällbadbehälters 5 durchläuft der Schlauch üblicherweise kontinuierlich die nachfolgenden Prozeßstufen.

Das Vorfällbad 4 befindet sich zwischen Viskosierdüse und Innenfällbadoberfläche. Der Abstand 13 zwischen Viskosierung und lnnenvorfällung ist abhängig von der Güte der Fasereinbettung bei der beidseitigen Beschichtung. Je schneller die Einbettung abgeschlossen ist, umso eher kann die Regenerierung der Innenoberfläche erfolgen.

Die Vorfällung wird kurz unterhalb der Düse beginnen, der Abstand 13 üblich sehr klein sein.

In der Darstellung besteht das Vorfällbad 4 aus einer Scheibe 14, die fest verbunden ist mit einem Zylinder 15. Beide Teile bilden mit dem Viskoseschlauch 3 einen ringförmigen Raum, in dem sich das Fällbad 16 befindet, das Koagulation und Vorfällung bewirkt. Die Ergänzung des Fällbades 16 erfolgt über die Zuführleitung 17. Die zugeführte Menge wird dabei über einen Durchflußmesser 18 kontrolliert und über ein Steuerventil 19 eingestellt. Damit ist das Maß der Innenfällung vor der Hauptfällung steuerbar.

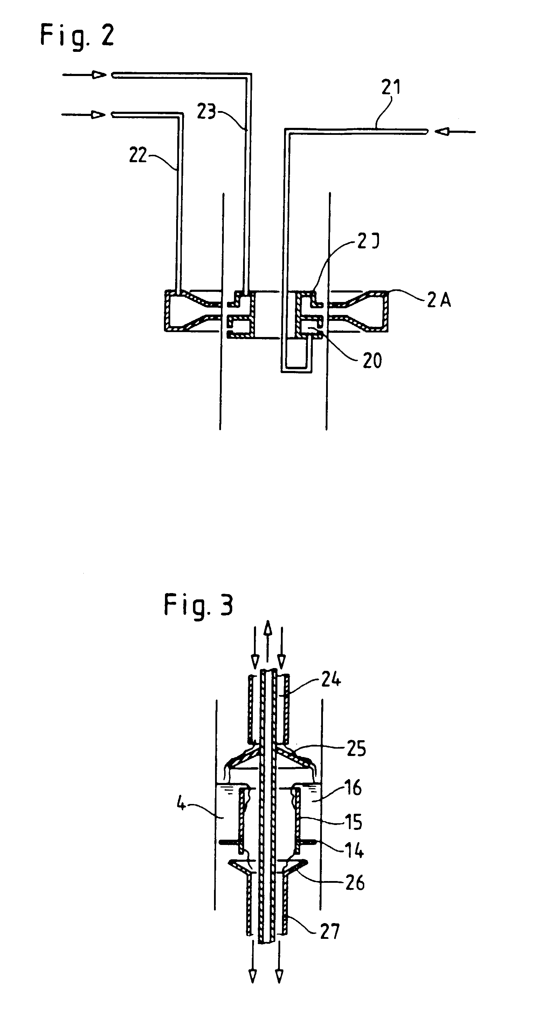

Fig. 2 zeigt ein Ausführungsbeispiel, bei dem das Vorfällbad direkt nach der Innenviskosierung mittels Düse 21 über eine Ringdüse 20 aufgebracht wird. Aus Gründen der vereinfachten Düsenbefestigung sind beide Einrichtungen miteinander zu einem Komplex verbunden. Bei dieser Ausrüstung ist es besonders bedeutungsvoll, daß eine sehr schnelle Einbettung der eingesetzten Vliesstoffe erreicht wird.

Bezogen auf Fig. 1 ist der Austausch der Innenviskosierdüse 2I durch die Kombination nach Fig. 2 eine weitere optimierte Lösung der Innenfällung. Hierdurch wird eine zweistufige Fällbadbehandlung erreicht. 22 und 23 sind die Viskosezuführleitungen zu den Viskosebeschichtungsdusen. Über 21 erfolgt die Versorgung mit Fällflüssigkeit.

Fig. 3 zeigt ein weiteres Ausführungsbeispiel. Die Zuführung des gesamten Innenfällbades erfolgt über Rohr 24. Über einen Verteilerteller 25 gelangt das gesamte Innenfällbad in ein Aufnahmegefäß 4 für Fällbad zur Vorfällung analog aufgebaut dem aus Fig. 1. Die über die Kante des Zylinders nach innen übertretende Fällflüssigkeit wird von einem Trichter 26 aufgenommen und in das mit ihm direkt verbundene Rohr 27 geleitet. Die Öffnung des Rohres 27 endet im Innenfällbad, in das das Überlauffällbad aus dem Vorfällbad geleitet wird.

Eine andere Variation ist die Überführung des Innenfällbades aus Rohr 27 auf einen Verteilerteller wie unter 25 dargestellt. Die Weiterführung des Fällbades erfolgt wie zuvor beschrieben. Auf diese Weise wird die Fällflüssigkeit kaskadenförmig bis zur Fällbadoberfläche im Bereich des Fällbehälters 5 dem Innenfällbad 7 zugeführt.

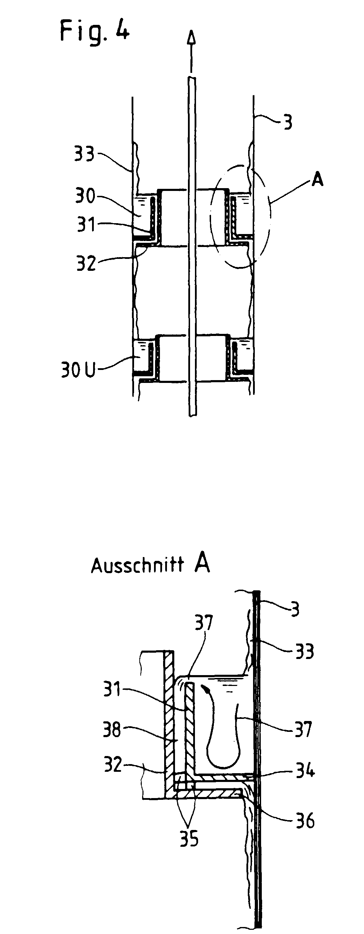

Eine weitere kaskadenförmige Fällflüssigkeitsführung ist in Fig. 4 dargestellt. Auf der Schlauchinnenseite des viskosierten Faservlieses 3 fließt die Fällflüssigkeit 33 beispielsweise nach Verlassen der Düse 20, Fig. 2. Sie wird zurückgehalten in einer ringförmigen Auffangwanne 30. Diese besteht aus einer Außenwanne 31 und einer Innenwanne 32. Die beiden Wannen sind über Noppen 35 zueinander zentriert. Zwischen den Noppen besteht ein freier Raum, durch den die Flüssigkeit durchtritt. Die Außenwanne 31 nimmt die Fällflüssigkeit 33 auf, wobei die Rundkante 34 im Kontakt zu dem Viskoseschlauch 3 steht. Es bildet sich ein Fällflüssigkeitsring, da die zwischen Ringkante 34 und Schlauch 3 hindurchtretende Flüssigkeit nur ein Bruchteil der Zulaufmenge 33 beträgt. Der Flüssigkeitsring bewirkt eine Vergleichmäßigung der Beaufschlagung des Innenschlauches mit Fällmittel. Er dient gleichzeitig zusammen mit der Rundkante 34 der Abstützung des im Regenerierprozeß befindlichen Schlauches und vermeidet so die Ausbildung von Schrumpffalten beim Fällungsablauf. Die gefüllte Außenwanne 31 läuft über ihre Ringkante 37.

Die überlaufende Fällflüssigkeit wird in dem Ringraum 38 zwischen Außen- und Innenwanne verteilt und tritt über die Rundkante 36 gleichmäßig aus. Der Durchmesserunterschied zwischen den Rundkanten 34 und 36 gewährleistet die Ausbildung eines Ringspaltes, über den die gleichmäßig verteilte Fällflüssigkeit wiederum auf die Darmschlauch-Innenwand aufgetragen wird.

Die Bewegung des Viskoseschlauches 3 zur feststehenden Auffangwanne 30 sorgt für eine Flüssigkeitsumwälzung wie sie symbolisch durch den gekrümmten Pfeil 37 angedeutet ist.

Der Kontakt der Rundkante 34 zum Schlauch bewirkt die Entfernung verbrauchten Fullbades. Unterhalb der beschriebenen Auffang- und Verteilungseinrichtung 30 ist eine weitere identische Auffangwanne 30 u dargestellt.

Mehrere dieser Vorrichtungen befinden sich auf der Strecke zwischen Viskosebeschichtung und Fällbadbehälter. Sie haben die Aufgabe der gleichmäßigen Verteilung der Fällflüssigkeit sowie der Abstützung des Viskoseschlauches zwecks Vermeidung von Schrumpffalten.

Die hier beschreibenen Fällbadauftragsvorrichtungen sollen im wesentlichen das Prinzip der Realisierung des Verfahrensablaufes darstellen. Eine Vielzahl anderer Verteilungseinrichtungen und Kombinationen sind denkbar und realisierbar.

## Patentansprüche

1. Verfahren zur Herstellung eines faserverstärkten Celluloseschlauches durch kontinuierliche Beschichtung eines Faservlieses mit einer alkalischen Viskoselösung, die mittels einer säurehaltigen Fällflüssigkeit neutralisiert und zu Celluloseregenerat umgewandelt wird, wobei der frisch gesponnene Viskoseschlauch nach Verlassen der Beschichtungsdüsen eine Luftstrecke vor Eintauchen in den mit Fällflüssigkeit gefüllten Behälter durchläuft, danach eine Nachfällung erfolgt, in einer Wasserwäsche die entstandenen Neutralisationssalze entfernt und ein Bad zur Aufnahme von Weichmachern und einen anschließenden Trockenprozeß durchläuft, dadurch gekennzeichnet, daß auf der Strecke zwischen Viskosebeschichtung und Eintauchen in das Fällungsbad auf den frischen Viskoseschlauch im Schlauchinnern wäßrige, säurehaltige Fällungsmittel zwecks Verfestigung und Regenerierung zu Celluloseregenerat zur Einwirkung gebracht werden, wobei mit dem Auftrag der Fällflüssigkeit direkt nach Abschluß der Fasereinbettung in Viskose begonnen wird und die Fällflüssigkeit mit dem Schlauch über gegebenenfalls feststehende Inneneinrichtungen geführt wird, die so gestaltet sind, daß sie den mit Fällbad beaufschlagten Schlauch stützen und dabei in gerundeter Form halten, daß die Länge der Innenvorfällstrecke bis 10 Meter lang, bevorzugt 2 bis 6 Meter, gestaltet ist, um eine intensive Vorfällung zu erreichen und die Säurekonzentration so bemessen ist, daß die im Schlauchinnern wirksam werdende Teilverfestigung durch Celluloseregeneratbildung die gleichmäßige Verteilung der wäßrigen Außenviskose einschließlich Fasereinbettung nicht behindert und infolge der Schlauchverfestigung durch die Innenvorfällung der weitere Ablauf der Innenfällung nach Eintauchen in die Fällflüssigkeit so unter reduzierter Gasfreisetzung abläuft, daß die Fällbadtiefe bis zur Umlenkwalze 2 bis 10 Meter beträgt, bevorzugt 4 bis 7 Meter.

2. Verfahren nach Anspruch 1, dadurch gekennzeichnet, daß das Vorfällbad ein Teilstrom des gesamten Innenfällbades ist.

3. Verfahren nach Anspruch 1 oder 2, dadurch gekennzeichnet, daß das Vorfällbad das gesamte dem Schlauch zugeführte Innenfällbad ist.

4. Verfahren nach einem der Ansprüche 1 bis 3, dadurch gekennzeichnet, daß Säure- oder Puffersalzkonzentrationen des Innenfällbades angehoben sind gegenüber dem Außenfällbad und einen Teil oder die gesamte für den im ersten Fällprozeß benötigten Mengen darstellen.

5. Verfahren nach einem der Ansprüche 1 bis 4, dadurch gekennzeichnet, daß nur eine der dem Prozeß zugeführten Komponentensäure oder Puffersalze dem Vorfällbad zugegeben wird.

6. Verfahren nach einem der Ansprüche 1 bis 5, dadurch gekennzeichnet, daß die gesamten Fällbäder ein gemeinsames Sammelsystem haben, aus dem die Versorgung der Innen- und Außenfällbäder für den ersten Fällprozeß erfolgt.

7. Verfahren nach Anspruch 1, dadurch gekennzeichnet, daß anstatt der wäßrigen Fällflüssigkeit zur Vorfällung die Neutralisation und Fällung über die Zuführung säurebildender Oxide erfolgt.

8. Verfahren nach einem der Ansprüche 1 bis 7, dadurch gekennzeichnet, daß neben den Fällsubstanzen Stützgase im Schlauchinnern verwendet werden, die die stützenden Inneneinrichtungen ganz oder teilweise ersetzen.

9. Verfahren nach einem der Ansprüche 1 bis 8, dadurch gekennzeichnet, daß das Vorfällbad bzw. Innenfällbad und/oder geführte Gase mit Viskose oder Viskosezusätzen reagierende Stoffe enthalten.

10. Verfahren nach einem der Ansprüche 1 bis 9, dadurch gekennzeichnet, daß der innen vorgefällte Darm über eine Kalibervorrichtung vor Beginn der Hauptfällung mit Außenfällbad gezogen wird.

11. Verfahren nach einem der Ansprüche 1 bis 10, dadurch gekennzeichnet, daß die lnnenfällung oberhalb des Fällbehälters eine den Fällprozeß unterstützende Außenbeaufschlagung mit Fällungsmitteln erfährt.

12. Verfahren nach Anspruch 11, dadurch gekennzeichnet, daß die Außenfällung zeitlich verzögert zur Innenfällung einsetzt.

13. Verfahren nach den Ansprüchen 1 bis 12, dadurch gekennzeichnet, daß die Luftstrecke zwischen Viskosiereinrichtung und Fällbadspiegel auf der Schlauchaußenseite durch eine Gas- oder Gasgemischstrecke ersetzt ist.

## Claims

1. Process for producing a fibre-reinforced cellulose hose by continuously coating a fibrous non-woven fabric with an alkaline viscose solution which is neutralised by means of an acid-containing precipitating liquid and converted into regenerated cellulose, wherein the freshly spun viscose hose, after leaving the coating nozzles, passes through an air gap prior to being immersed in the tank filled with precipitating liquid, thereafter a post-precipitation takes place, the neutralisation salts formed are removed in a water wash and the hose passes through a bath in order to take up plasticisers and then through a drying process, characterised in that, on the path between viscose coating and immersion in the precipitating bath, aqueous acid-containing precipitating agents are caused to act upon the fresh viscose hose within the hose for the purpose of coagulation and regeneration in order to produce regenerated cellulose, the application of the precipitating liquid being commenced immediately after the fibres have been embedded in viscose and the precipitating liquid together with the hose being passed through optionally fixed internal devices, which are so arranged that they support the hose covered with precipitating liquid and thereby maintain it in rounded form, that the length of the inner preliminary precipitation path is up to 10 metres long, preferably 2 to 6 metres long, in order to achieve an intensive preliminary precipitation, and the acid concentration is so calculated that the partial coagulation actually taking place within the hose as a result of formation of regenerated cellulose does not impede the uniform distribution of the aqueous outer viscose inclusive of fibre embedding and, in consequence of the coagulation of the hose owing to the inner preliminary precipitation, the further progress of the inner precipitation after immersion into the precipitating liquid proceeds in such a way, accompanied by decreased release of gas, that the depth of the precipitating bath as far as the deflection roller is 2 to 10 metres, preferably 4 to 7 metres.

2. Process according to claim 1, characterised in that the preliminary precipitating bath is a sub-stream of the entire inner precipitating bath.

3. Process according to claim 1 or 2, characterised in that the preliminary precipitating bath is the entire inner precipitating bath contents supplied to the hose.

4. Process according to one of claims 1 to 3, characterised in that the concentrations of acid or of buffer salt in the inner precipitating bath are increased in relation to the outer precipitating bath and constitute a part, or the whole, of the quantities required for the first precipitation process.

5. Process according to one of claims 1 to 4, characterised in that only one of the component acid or buffer salts supplied to the process is added to the preliminary precipitating bath.

6. Process according to one of claims 1 to 5, characterised in that all the precipitating baths have a common collecting system, from which the inner and outer precipitating baths for the first precipitation process are supplied.

7. Process according to claim 1, characterised in that, instead of the aqueous precipitating liquid for the purpose of preliminary precipitation, the neutralisation and precipitation is effected by the supply of acid-forming oxides.

8. Process according to one of claims 1 to 7, characterised in that, in addition to the precipitating substances, supporting gases are used within the hose which wholly or partially replace the supporting internal devices.

9. Process according to one of claims 1 to 8, characterised in that the preliminary precipitating bath or inner precipitating bath and/or introduced gases contain substances which react with viscose or with viscose additives.

10. Process according to one of claims 1 to 9, characterised in that the internally pre-precipitated skin is drawn through a sizing device prior to commencement of the main precipitation with the outer precipitating bath.

11. Process according to one of claims 1 to 10, characterised in that, above the precipitation tank, the inner precipitation is subjected to an outer application of precipitating agents, which supports the precipitating process.

12. Process according to claim 11, characterised in that the start of the outer precipitation is delayed in relation to the inner precipitation.

13. Process according to claims 1 to 12, characterised in that the air gap between the viscosing device and the level of the precipitating bath is replaced on the outside of the hose by a gap containing gas or gas mixture.

## Revendications

1. Procédé de préparation d'un boyau en cellulose renforcé par fibres, par enduction en continu d'un voile en fibres avec une solution alcaline de viscose, qui est neutralisée au moyen d'un liquide de précipitation contenant un acide et convertie en régénérat de cellulose, où le boyau en viscose fraîchement préparé traverse, après avoir quitté la buse d'enduction, un espace d'air avant l'immersion dans le récipient rempli de liquide de précipitation, ensuite subit une précipitation ultérieure, voit dans un lavage aqueux, les sels formés de la neutralisation éliminés et traverse un bain pour la réception du plastifiant et un processus de séchage contigu, caractérisé en ce que dans l'intervalle entre l'enduction de viscose et l'immersion dans le bain de précipitation, sur le boyau frais en viscose dans l'espace interne du boyau, on applique un agent de précipitation aqueux, contenant un acide pour renforcer et régénérer en régénérat de cellulose, où avec l'apport du liquide de précipitation directement après la sortie, l'enrobage des fibres par la viscose est commencé et le liquide de précipitation est amené avec le boyau sur les dispositifs internes facultativement fixes, qui sont agencés, de sorte qu'ils soutiennent le boyau muni du bain de précipitation et ainsi, le maintiennent dans une forme arrondie, que la longueur de l'intervalle de précipitation préalable interne atteigne jusqu'à 10 mètres, de préférence 2 à 6 mètres, pour atteindre une précipitation préalable intensive et la concentration en acide est ajustée, de sorte que le renforcement partiel devenant efficace dans l'espace interne du boyau par la formation du régénérat de cellulose, ne gêne pas la répartition régulière de la viscose aqueuse externe y compris l'enrobage des fibres et, suite au renforcement du boyau par la précipitation préalable interne, le déroulement ultérieur de la précipitation interne se déroule après immersion dans le liquide de précipitation sous libération réduite de gaz, si bien que la profondeur du bain de précipitation jusqu'au cylindre déflecteur se situe dans l'intervalle allant de 2 à 10 mètres, de préférence de 4 à 7 mètres.

2. Procédé suivant la revendication 1, caractérisé en ce que le bain de précipitation préalable est un courant partiel du bain de précipitation interne complet.

3. Procédé suivant la revendication 1 ou 2, caractérisé en ce que le bain de précipitation préalable est le bain de précipitation interne complet amené dans le boyau.

4. Procédé suivant l'une quelconque des revendications 1 à 3, caractérisé en ce que les concentrations en acide et en sels de tamponnage du bain de précipitation interne sont plus élevées par rapport au bain de précipitation externe et représentent une partie ou la totalité des quantités nécessaires au premier processus de précipitation.

5. Procédé suivant l'une quelconque des revendications 1 à 4, caractérisé en ce que seulement l'un des composants acides ou sels de tamponnage ajoutés au processus, est ajouté au bain de précipitation préalable.

6. Procédé suivant l'une quelconque des revendications 1 à 5, caractérisé en ce que l'ensemble des bains de précipitation présente un système de réception commun, à partir duquel l'approvisionnement des bains de précipitation interne et externe se fait pour le premier processus de précipitation.

7. Procédé suivant la revendication 1, caractérisé en ce que à la place du liquide aqueux de précipitation pour la préprécipitation, la neutralisation et la précipitation se font par addition d'un oxyde formant acide.

8. Procédé suivant l'une quelconque des revendications 1 à 7, caractérisé en ce que, en plus des substances de précipitation, on utilise un gaz de soutien dans l'espace interne du boyau, qui remplace complètement ou partiellement le dispositif support de l'espace interne.

9. Procédé suivant l'une quelconque des revendications 1 à 8, caractérisé en ce que le bain de préprécipitation ou le bain de précipitation interne et/ou le gaz amené contiennent des substances réagissant avec la viscose ou les additifs de la viscose.

10. Procédé suivant l'une quelconque des revendications 1 à 9, caractérisé en ce que le tuyau préprécipité en interne est étiré sur un dispositif de calibrage avant le début de la précipitation principale avec le bain de précipitation externe.

11. Procédé suivant l'une quelconque des revendications 1 à 10, caractérisé en ce que la précipitation interne au dessus du récipient de précipitation subit une application externe soutenant le processus de précipitation avec un agent de précipitation.

12. Procédé suivant la revendication 11, caractérisé en ce que la précipitation externe est mise en oeuvre de manière temporairement freinée par rapport à la précipitation interne.

13. Procédé suivant les revendications 1 à 12, caractérisé en ce que l'intervalle d'air entre le dispositif d'application de la viscose et le niveau du bain de précipitation est remplacé sur la face externe du boyau par un intervalle gazeux ou de mélange gazeux.
